Europäisches Patentamt

European Patent Office

Office européen des brevets

(11) Numéro de publication: **0 485 931 A1**

## DEMANDE DE BREVET EUROPEEN

(21) Numéro de dépôt: **91119192.2**

(51) Int. Cl.⁵: **H04Q 11/04**

(22) Date de dépôt: **11.11.91**

(30) Priorité: **15.11.90 FR 9014213**

(43) Date de publication de la demande:
**20.05.92 Bulletin 92/21**

(84) Etats contractants désignés:
**AT BE CH DE DK ES FR GB IT LI NL SE**

(71) Demandeur: **ALCATEL BUSINESS SYSTEMS**
**12, rue de la Baume**

**F-75008 Paris(FR)**

(72) Inventeur: **Douhet, Gérard**
**26, rue de la Chapelle**
**F-67640 Fegersheim(FR)**

(74) Mandataire: **Weinmiller, Jürgen et al**
**Lennéstrasse 9 Postfach 24**
**W-8133 Feldafing(DE)**

(54) **Agencement de câblage pour installation de communication multiservice.**

(57) L'agencement est destiné à une installation de communication multiservice rattachée à un réseau RNIS par une liaison à deux fils conducteurs (2).

Il comporte une structure de bus comportant un câble (4) à au moins quatre paires de fils conducteurs reliant entre elles une pluralité de prises de raccordement de terminaux. Une première de ces paires de fils (11) est raccordée aux deux fils conducteurs de rattachement (5) de l'installation au réseau et dessert un premier jeu de bornes (20) de

prises (6a à 6D) prévues pour un raccordement d'un terminal (10) à un niveau de référence U.

Une seconde paire de fils (13) dessert un second jeu de bornes (21) des prises, celles-ci étant aussi prévues pour un raccordement de terminal téléphonique analogique.

Deux autres paires de fils (16) desservent un troisième jeu de bornes (22) des prises, celles-ci étant aussi prévues pour un raccordement d'un terminal à un niveau de référence S.

FIG. 3

L'invention concerne un agencement de câblage pour installation de communication multiservice, notamment en milieu de type résidentiel.

La plupart des actuelles installations de communication de type téléphonique analogique qui sont réalisées en milieu de type résidentiel, c'est-à-dire essentiellement pour des logements individuels ou pour de petites installations par exemple industrielles ou commerciales, comportent des agencements de câblage venant se relier au réseau public commuté au niveau d'accès analogiques. Une variante classique d'agencement de câblage permet une distribution série ou parallèle vers jusqu'à trois prises femelles de raccordement d'appareils téléphoniques. Du câble téléphonique à deux paires de fils est le plus souvent employé pour ce type d'agencement.

La desserte d'une installation, telle qu'envisagée ci-dessus, à partir d'un accès de base d'un réseau numérique à intégration de services - dit RNIS - selon les recommandations du Comité Consultatif International Télégraphique et Téléphonique (CCITT), implique un agencement de câblage différent.

Ce dernier doit en effet pouvoir comporter une possibilité d'accès au niveau d'un point de référence U par l'intermédiaire d'une paire de fils et au niveau d'un point de référence S par l'intermédiaire de quatre paires de fils constituant un bus interne à l'installation desservie par l'agencement de câblage considéré.

Il es rappelé que les recommandations du CCITT relatives au réseau RNIS définissent un modèle architectural de base pour ces réseaux avec un certain nombre de points de référence correspondants aux frontières communes aux groupements fonctionnels constitutifs de tels réseaux.

Ainsi, la structure reliant une installation d'usager à un commutateur de rattachement dans un réseau RNIS est susceptible de comporter une suite de un à quatre groupements s'interfaçant au niveau des points de référence respectivement dénommés R, S, T, U et V.

Ce dernier correspond à la frontière entre le commutateur de rattachement d'une installation au réseau RNIS et l'équipement d'extrémité de transmission référencé TL, qui est associé à ce commutateur et qui termine la liaison de transmission desservant l'installation distante.

Le point de référence U correspond à l'interface de transmission entre un équipement d'extrémité TL et un équipement dénommé terminaison numérique de réseau TNR qui est situé au niveau de l'installation d'usager.

Le point de référence T correspond à l'interface, dite d'accès de base, entre une terminaison numérique de réseau TNR et un équipement dénommé terminaison numérique d'abonné TNA ou NT2 qui dans la pratique correspond à un commutateur privé, une installation d'intercommunication, un réseau local d'entreprise...

Le point de référence S correspond à l'interface entre une terminaison numérique d'abonné TNA et un terminal d'usager TE de type RNIS ou entre une terminaison numérique d'abonné TNA et un adaptateur référencé AT, lorsque le terminal d'usager desservi est un terminal qui n'a pas été prévu pour être raccordé à un réseau RNIS, par exemple un poste téléphonique analogique existant.

En raison des contraintes très différentes liées les unes aux réseaux téléphoniques commutés usuels et les autres aux réseaux RNIS il n'est pas possible de raccorder simultanément au niveau des installations de type résidentiel des terminaux téléphoniques analogiques et des terminaux RNIS autrement que par juxtaposition des deux agencements de câblage évoqués plus haut.

Or ceci est un inconvénient important pour l'usager détenteur de terminaux analogiques spécialisés qui souhaite pouvoir continuer à exploiter ces derniers tout en bénéficiant des avantages d'un raccordement à un réseau RNIS.

L'invention propose donc un agencement de câblage pour installation de communication multiservice raccordée par une paire de fils au réseau auquel elle est rattachée.

Selon une caractéristique de l'invention, l'agencement comporte une structure de bus à au moins quatre paires de fils conducteurs reliant entre elles une pluralité de prises de raccordement de terminaux. Une première de ces paires de fils est raccordée aux deux fils conducteurs de rattachement de l'installation au réseau et dessert un premier jeu de bornes d'au moins certaines des différentes prises qui sont identiquement prévues pour un raccordement d'un terminal à un niveau de référence U. Une seconde paire de fils dessert un second jeu de bornes des différentes prises qui sont identiquement prévues sur chaque prise pour un raccordement de terminal téléphonique analogique à un niveau de référence Z.

Deux autres paires de fils, dites de bus S, desservent un troisième jeu de bornes des différentes prises qui sont identiquement prévues pour un raccordement d'un terminal à un niveau de référence S.

L'invention, ses caractéristiques et ses avantages sont précisés dans la description qui suit, en liaison avec les figures répertoriées ci-dessous.

La figure 1 présente un synoptique d'un agencement de câblage selon l'invention.

Les figures 2 et 3 présentent deux variantes d'agencement de câblage selon l'invention.

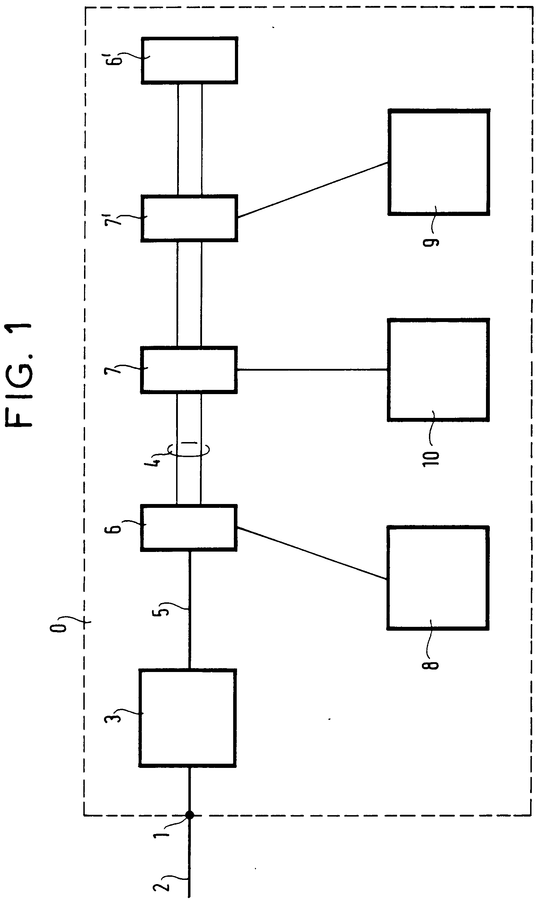

L'agencement de câblage dont la topologie est présentée figure 1 est destinée à desservir une installation de communication multiservice 0, du type évoqué dans le préambule de la présente demande, dont le rattachement à un réseau RNIS, non figuré,s'effectue par un accès 1 relié à ce réseau par une liaison à deux fils conducteurs 2.

Cette liaison 2 permet de manière habituelle la transmission d'informations numérisées entre l'installation 0 et le réseau, dans les conditions définies en relation avec le niveau de référence U évoqué plus haut, ainsi qu'une téléalimentation, généralement partielle, de cette installation.

La liaison 2 aboutit habituellement sur un boîtier de raccordement 3 au niveau de l'accès 1, ce boîtier comporte éventuellement des éléments de protection électrique contre les surtensions et les surintensités en plus d'organes de type bornes permettant le raccordement des deux fils conducteurs de la liaison 2 à des fils correspondants d'un câble 4 de desserte de l'installation 0, les éléments de protection et les organes, bien connus de l'homme de métier et sans rapport direct avec l'objet de l'invention, n'étant pas figurés ici.

La mise en liaison des fils de la liaison 2 avec les fils correspondants du câble 4 est réalisable au niveau du boîtier de raccordement 3, elle est préférablement effectuée au moyen d'une paire de fils d'un câble interne intermédiaire 5, dit de rattachement, placé entre le boîtier de raccordement 3 et une première des prises, telles 6, 6', 7, 7' prévues pour permettre le raccordement de divers terminaux dans l'installation 0. Les prises 6, 6', dites simples, sont par exemple des prises normalisées ISO 8877, CEI 130, CENELEC ENV 41001, permettant une mise en liaison avec huit fils conducteurs distincts, elles comportent en plus des organes de connexion pour une fiche complémentaire de raccordement de terminal et elles sont reliées entre elles, par une structure de bus organisée autour du câble 4.

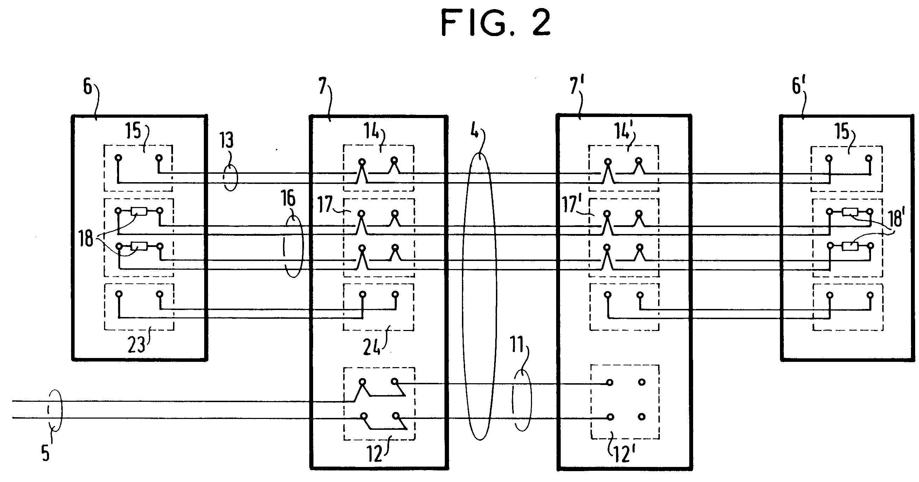

Dans une variante de réalisation proposée en figure 2, au moins certaines des prises, telles 7, 7', sont composées chacune d'une prise simple complétée par une extension permettant une mise en liaison avec deux fils conducteurs supplémentaires dont le rôle sera défini plus loin. Chaque prise simple est prévue pour permettre le raccordement d'un terminal dédié RNIS, tel que 8, ou d'un terminal téléphonique analogique, tel que 9.

Les prises à extension 7, 7' permettent aussi le raccordement d'une terminaison numérique de réseau TNR assurant une connexion d'interface U à interface S, ou encore d'un terminal, dit principal, tel que 10, ces prises peuvent recevoir alternativement chacune des fiches de raccordement des divers terminaux.

Un terminal principal 10 est un terminal qui est apte à se substituer à l'ensemble des équipements se plaçant en aval d'un point de référence U par rapport à un réseau RNIS.il est doté d'un équipement d'interface entre les niveaux de points de référence U et S qui comprend un circuit émetteur-récepteur de données au niveau du point de référence U, destiné à être raccordé à une ligne numérique d'abonné, un circuit contrôleur de communications qui assure le transfert des informations transitant par le canal D sur la ligne numérique d'abonné et un circuit d'accès abonné pour raccordement d'au moins un terminal, dépendant, de type RNIS, au niveau de point de référence S.

Ce terminal principal 10 comporte aussi une matrice de commutation temporelle insérée entre le circuit émetteur-récepteur, à laquelle elle est reliée en parallèle avec le circuit contrôleur de communications, et le circuit d'accès abonné, ladite matrice étant aussi reliée à un équipement de poste numérique que comporte le terminal principal considéré et étant commandée par un processeur de gestion que comporte ce terminal principal pour notamment superviser l'équipement de poste numérique, le circuit contrôleur de communications et le circuit d'accès abonné.

Selon la variante présentée en figure 2, la structure de bus, de type S enrichi, relie entre elles les différentes prises de l'installation 0 par l'intermédiaire du câble 4.

Ce dernier se relie aux deux fils du câble intermédiaire 5 et par conséquent de la liaison 2 de rattachement au réseau, via un poste principal 12 ici connecté dans l'une des prises dotées d'une extension, telles que 7 ou 7', par une fiche individuelle de raccordement, non représentée ici.

Dans le cas où l'installation comporte plusieurs prises à extension 7, 7'..., ces prises éventuellement autobouclantes, sont reliées entre elles par une paire de fils 11, dite première paire de fils, prolongeant le câble intermédiaire 5 et préférablement incorporée au câble 4.

Cette paire de fils 11 dessert un premier jeu de bornes ici référencé 12 ou 12' de chacune des prises identiques tels les premiers jeux 12 ou 12' pour les prises à extension 7, 7' et permet un raccordement d'un terminal au niveau de référence U, en particulier d'un terminal principal 12 tel qu'évoqué ci-dessus.

Une première de ces prises dotées d'une extension 7, 7'... est raccordée aux deux fils du câble intermédiaire 5 par deux des quatre bornes de son premier jeu et par les deux autres bornes de ce premier jeu aux deux fils de la paire 11.

Toute autre prise à extension de l'installation n'est raccordée qu'aux deux fils de la paire 11; soit par deux, soit par quatre bornes suivant sa position respective intercalaire ou d'extrémité, de manière qu'il soit possible de réaliser le branchement d'un terminal raccordable au niveau de référence U et particulièrement d'un terminal principal 12, au niveau de n'importe laquelle des prises à extension de l'installation, en raison de la caractéristique autobouclante de ces prises ou de la présence de dispositifs de straps enfichables dans ces prises, si ces dernières n'ont pas cette caractéristique d'autobouclage.

Une seconde paire de fils 13 du câble 4 dessert un second jeu de bornes référencé 14, 14', 15 ou 15' pour chacune des différentes prises représentées de l'installation 0, afin de permettre le raccordement dans ces prises d'un terminal analogique tel que 9 prévu pour être raccordé à un niveau de référence dit Z.

L'interfaçage nécessaire à la mise en communication d'un tel terminal analogique 9 avec un serveur ou un autre terminal par l'intermédiaire du réseau RNIS auquel est relié la liaison 2 est alors assuré par un terminal principal connecté par sa fiche individuelle de raccordement à une prise à extension de l'installation 0. Un terlminal adaptateur entre niveau de point de référence S et niveau de point de référence Z peut être connecté sur l'une des prises et réaliser la fonction de relais entre un terminal analogique relié à ce terminal adaptateur et un autre terminal, via le terminal principal 10 associé ou via une terminaison numérique de réseau TNR se substituant à ce terminal principal.

Dans le cas d'un terminal 9 dont la fiche de raccordement est connectée dans la prise simple 6, alors que la fiche du terminal principal de l'installation est connectée dans la prise à extension 7', les signaux, échangés entre ce terminal 9 et le réseau RNIS transitent, par la paire de fils 13, le terminal principal 10, la paire de fils 11 et les paires de fils du câble 5 et de la liaison 2 en série.

Deux autres paires de fils globalement référencées 16 du câble 4 desservent un troisième jeu de bornes qui est référencé 17, 17', 18 ou 18' pour les différentes prises représentées de l'installation 0 et qui comporte deux fois plus de bornes que les jeux 14, 14', 15, 15'.

Ces deux paires de fils 16 et les bornes correspondantes des prises de l'installation 0 permettent chacune le raccordement d'un terminal RNIS tel que 8 au niveau de référence S, c'est à dire par l'intermédiaire d'une liaison numérique à quatre fils, lorsque la prise considérée n'est pas déjà occupée par la fiche de raccordement d'un autre terminal.

Selon un processus classique chacune des deux paires 16 est dotée à ses deux extrémités de résistances de charge 18 qui sont préférablement montées dans les prises qui se situent aux extrémités du câble 4 dans l'installation 0, ici les prises simples 6 et 6'.

Chaque prise à extension 7, 7' permet en conséquence la connexion d'un terminal que celui-ci soit destiné à être raccordé au niveau U, S ou Z, ces deux derniers niveaux étant accessibles via les prises simples telles que 6, 6' qui permettent donc le raccordement des terminaux analogiques ou RNIS et qui permettent de répondre au problème ici posé, dès qu'une installation possède au moins une prise à extension et un poste principal tel que défini plus haut ou une terminaison numérique de réseau. Dans la mesure où la paire de fils 11 du câble 4 n'est exploitée qu'entre les prises à extension, telles que 7 et 7', il est possible d'exploiter les tronçons de cette paire de fils 11 qui relient par exemple une prise à extension à une prise simple, ou deux prise simples pour un autre usage, par exemple pour une téléalimentation d'un terminal connecté à un jeu de bornes 23 de la prise simple 6 par un autre connecté à un jeu de bornes 24 de la prise à extension 7. Une liaison permettant d'éviter le tintement des sonneries de postes analogiques raccordés à de tels prises est également réalisable par ce moyen.

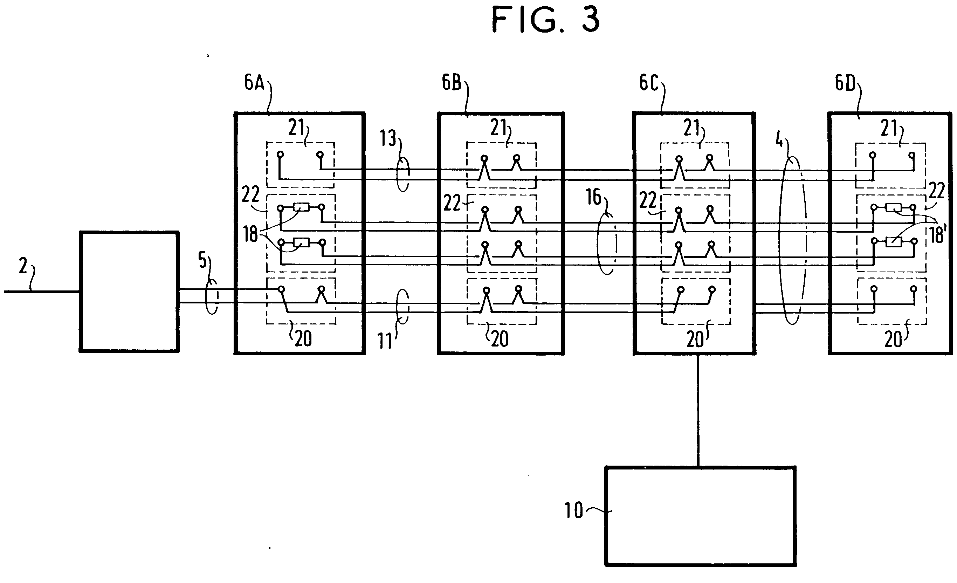

Dans la variante de réalisation présentée en figure 3, toutes les prises, telles 6A à 6D, sont du type dit simple défini plus haut et comportent huit bornes permettant de recevoir deux tronçons de câble 4 à quatre paires de fils, en plus des organes de connexion pour une fiche complémentaire de raccordement de terminal.

La prise physiquement la plus proche du boîtier de raccordement 3 où aboutit la liaison 2, soit ici la prise 6A, est reliée aux deux conducteurs du câble intermédiaire de rattachement 5 au niveau de deux bornes d'un premier jeu 20 qu'elle comporte, les deux autres bornes de ce premier jeu étant reliées à une des extrémités des deux fils de la première paire 11 du câble 4.

Les autres prises de l'installation sont intercalées entre les tronçons successifs de paire 11 à l'exception bien entendu de la plus éloignée d'entre elles, soit ici 6D.

Ceci permet de raccorder au niveau de référence U un terminal principal 10, tel que défini plus haut, par l'intermédiaire de n'importe laquelle des prises de l'installation à partir du moment où les prise situées en amont d'elle par rapport au boîtier de raccordement 3 assurent la continuité électrique, via les deux fils de la paire 11 qui les unissent.

Cette continuité est réalisée dans chaque prise, sauf dans celle où est connectée la fiche de raccordement du terminal principal où la continuité est rompue par ouverture d'un contact non représenté ou par déconnexion physique au niveau des bornes de premier jeu 20 de cette prise.

La second paire de fils 13 du câble 4 et les seconds jeux de bornes 21 des différentes prises 6A à 6D sont physiquement et fonctionnellement identiques à la seconde paire de fils 13 et aux seconds jeux de bornes évoqués en liaison avec la variante de réalisation objet de la figure 2. Il en va de même pour les deux autres paires de fils globalement référencés 16 et pour les troisièmes jeux de bornes 22 des prise 6A à 6D vis-à-vis des paires de fils 13 et des jeux de bornes 17, 17', 18 , 18'.

Cette variante de réalisation permet en conséquence la connexion d'un terminal destiné à être raccordé au niveau U, S ou Z dans n'importe laquelle des prises, telles que 6A à 6D, d'une installation 0, étant entendu que le raccordement d'un terminal au niveau de référence S ou Z, c'est-à-dire d'un terminal S ou Z, dans l'une des prises implique la présence d'un terminal principal 10 raccordé à une autre prise raccordée au câble de rattachement 5 par la première paire de fils 11, dans l'installation considérée.

## Revendications

1. Agencement de câblage pour installation de communication (0) notamment multiservice raccordée par une liaison à deux fils conducteurs au réseau auquel elle est rattachée, caractérisé en ce qu'il comporte une structure de bus par câble (4) à au moins quatre paires de fils conducteurs reliant entre elles une pluralité de prises 6, 6',7, 7', ou 6A à 6D) de raccordement de terminaux, en ce qu'une première de ces paires de fils (11) est raccordée aux deux fils conducteurs de rattachement de l'installation au réseau et dessert un premier jeu de bornes (12 ou 20) d'au moins certaines des différentes prises qui sont identiquement prévues pour un raccordement d'un terminal (10) à un niveau de référence U, en ce qu'une seconde paire de fils (13) dessert un second jeu de bornes (14 ou 21) des différentes prises qui sont identiquement prévues sur chaque prise pour un raccordement de terminal téléphonique analogique (9) à un niveau de référence Z, et en ce que deux autres paires de fils, dites de bus S, (16) desservent un troisième jeu de bornes (17 ou 22) des différentes prises qui sont identiquement prévues pour un raccordement d'un terminal (8) à un niveau de référence S.

2. Agencement de câblage, selon la revendication 1, caractérisé en ce que la mise en liaison de la seconde paire de fils (13) destinée à la desserte de terminaux analogiques (9) est prévue assurée par l'intermédiaire d'un terminal (10) de type RNIS, dit principal, connecté à une des dites prises et muni d'une interface de raccordement à un niveau de référence U et d'une interface de raccordement à un niveau de référence Z respectivement reliées l'une au premier et l'autre au second jeu de bornes (12 ou 20, 14 ou 21) de cette prise, lorsque ce terminal principal y est connecté.

3. Agencement de câblage, selon au moins l'une des revendications 1 et 2, caractérisé en ce que la mise en liaison des deux paires de fils (16), dites de bus S, destinées à la desserte de terminaux se raccordant au niveau de référence S est prévue assurée par l'intermédiaire d'un terminal (10) de type RNIS, dit principal, connecté à une des dites prises et muni d'une interface de raccordement à un niveau de référence U et d'une interface de raccordement à un niveau de référence S respectivement reliées l'une au premier et l'autre au troisième jeu de bornes ( 12 ou 20, 17 ou 22) de cette prise, lorsque ce terminal principal y est connecté.

4. Agencement de câblage, selon la revendication 1, caractérisé en ce qu'il comporte au moins une prise dont le premier jeu de bornes (20) est téléalimenté à partir du premier jeu de bornes d'une autre prise, via une section de première paire de fils (11) isolée, par coupure, des deux fils conducteurs (5) par lesquels l'installation est raccordée au réseau auquel elle est rattachée.

5. Agencement de câblage, selon la revendication 1, caractérisé en ce que la mise en liaison des deux paires de fils (16), dites de bus S, destinées à la desserte de terminaux se raccordant au niveau de référence S est prévue assurée par l'intermédiaire d'une terminaison numérique de réseau, qui est connectée à une des dites prises et qui assure l'interface entre niveau de référence U et niveau de référence S, étant reliée au premier et au troisième jeu de bornes ( 12 ou 20, 17 ou 22) de cette prise à cet effet, lorsqu'elle est connectée.

FIG. 1

# FIG. 2

EP 0 485 931 A1

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PROCEEDINGS OF THE NATIONAL COMMUNICATIONS FORUM, Oak Brook, 1986, vol. 40, pages 303-309; W.R. GRANTHAM: "Voice and data service - the user's perspective" <br> * Page 306, colonne de gauche, ligne 7 - colonne de droite, ligne 22; figures 5,6 * | 1-5 | H 04 Q 11/04 |
| X | ADVANCES IN INSTRUMENTATION AND CONTROL, vol. 44, partie 4, 1989, pages 1663-1668, Research Triangle Park, NC, US; J.R. BYLANDER: "A communication distribution network including ISDN" <br> * Le document en entier * | 1-5 | |
| A | COMMUNICATION & TRANSMISSION, vol. 9, no. 3, septembre 1987, pages 35-50, Paris, FR; J.-L. LAVOISARD et al.: "Les installations terminales d'abonnes" <br> * Page 38, colonne de droite, lignes 17-57; figures 7,8 * | | DOMAINES TECHNIQUES RECHERCHES (Int. Cl.5) |
| A | CONFERENCE RECORD WESCON '87, Los Angeles, 1987, vol. 31, session 20/5, pages 1-7; C. STACEY: "Build your own ISDN terminal/terminal adapter" <br> * Page 1, colonne de gauche, lignes 16-41; figure 1 * | | H 04 Q |

Le présent rapport a été établi pour toutes les revendications

| Lieu de la recherche | Date d'achèvement de la recherche | Examinateur |
|---|---|---|
| LA HAYE | 23-01-1992 | O'REILLY D.J.K. |